# NEUE EUROPÄISCHE PATENTSCHRIFT

(11) **EP 1 749 700 B2**
(45) Veröffentlichungstag und Bekanntmachung des Hinweises auf die Entscheidung über den Einspruch: **18.03.2020**
(45) Hinweis auf die Patenterteilung: 07.05.2008
(21) Anmeldenummer: 06115436.5
(22) Anmeldetag: 14.06.2006
(51) Int. Cl.: B60R 13/04, B61D 17/18, B61D 19/02, B64C 1/12

(54) **Großräumiges Fahrzeug für die Personenbeförderung, insbesondere Straßenbahn oder Omnibus**
Large sized vehicle for passenger transportation, especially railway or omnibus
Véhicule de transport en commun de grande capacité, notamment ferroviaire ou omnibus

(30) Priorität: 01.08.2005 DE 102005036111
(43) Veröffentlichungstag der Anmeldung: 07.02.2007
(73) Patentinhaber: Siemens Mobility GmbH, 81739 München (DE)
(72) Erfinder: Bernard, Paul, 40223 Düsseldorf (DE); Schade, Burkhard, 44879 Bochum (DE); Schillings, Dirk, 41472 Neuss (DE)

(56) Entgegenhaltungen:
- EP-A1- 1 378 386
- DE-A1- 4 437 843
- DE-B4- 4 438 461
- DE-U1- 20 313 996
- DE-U1- 29 710 309
- FR-A1- 2 798 332
- GB-A- 2 283 375
- JP-A- 2000 038 096
- US-A- 6 033 745
- Auszug aus der Homepage http://de.wikipedia.org/wiki/DBAG_Baureihe _481 & Arnold Nitsch, Einsatz der Triebzüge Baureihe 481 bei der S-Bahn Berlin - Teil 1, eb-Elektrische Bahnen 102 (2004) Heft 8-9, Seiten 318, 345-353 & Fotografie, S-Bahn Berlin BR 481, Hennigsdorf, 23. Juli 2000 & Fotografie, Auszug aus der Homepage http://upload.wikimedia.org/wikipedia/comm ons/b/bd/S-Bahn_Berlin_Train_Type_481_Inte rior.jpg & Auszug aus der Homepage http://www.berliner-s-bahn-ontoo.de/32,0,b r-481,index,0.php & Technische Zeichnung "Türsäulenverkleidung 1, Einbau" & Technische Zeichnung "Haltestangen" & Technische Zeichnung "Notsprechstelle-Einbau" & Technische Zeichnung "Notbremse-Einbau" & Bildschirmausdruck, SAP, "Türsäulenverkleidung 1" & Stückliste "Türsäulenverkleidung 1", Blatt 01
- Bombardier Transportation, Deutschland nonstop, Nationale Ausgabe Nr. 3, Dezember 2002, Seiten 1 und 4 & Fotografien vom Tag der offenen Tür am 21. September 2002 bei Bombardier in Hennigsdorf, Bilder 1 bis 16 & Ausdruck einer internen Email vom 16. August 2002 betreffend den Tag der offenen Tür
- Kurzbericht, Bombardier übergab ersten Zug der Metro Linie 2 in Guangzhou, Verkehr und Technik 2004, Heft 2, Seiten 38, 68 und 69 & Technische Zeichnung "Door pillar installation-Türsäulen Anbau" & Technische Zeichnung "Door pillar cpl. left-Türsäule vst. Links
- Kopie des Textes für eine Ausstellungstafel für den Tag der offenen Tür bei Bombardier am 21. September 2002, Seiten 1 bis 3
- Auszug aus der Homepage http://en.wikipedia.org/wiki/British_Rail_ Class_171 & Auszug aus der Homepage http://www.bombardier.com/de/transportatio n/produkte-und-service/schienenfahrzeuge/i ntercityzuege/triebzeuge/turbostar---gross britannien?docID=0901260D8001288E & Fotografie, Auszug aus der Homepage http://flickr.com/photos/mmhmm/242400478/s izes/l/ & Technische Zeichnung "Standback-LH with Door Release & Elther Electric Socket or Blanking Plate" & Stückliste "Standback-LH with Door Release", Blatt 01-06 & Technische Zeichnung "Vestibule Standback"
- Auszug aus der Homepage http://de.wikipedia.org/wiki/Shenzhen_Metr o & Fotografien, Auszug aus der Homepage http://mic-ro.com/metro/phototour.html?cit y=Shenzen & Fotografie, Auszug aus der Homepage http://www.flickr.com/photos/770/408836786 /sizes/o/ & Technische Zeichnung "Draughtscreen installation, right-Klimaschutzwand Anbau", Blatt 01 & Technische Zeichnung "Draughtscreen installation, right-Klimaschutzwand Anbau", Blatt 02 & Technische Zeichnung "Doorpillarflap installation-Türklappe mit Haltestange"
- Fotografien, Roll-Out Bauserie C1.10, 04. Februar 2005, Bilder 1 bis 7 & Fotografien, Ankunft eines Zuges der Serie C1.10 in München am 07.Juni 2005, Bilder 1 bis 3 & Technische Zeichnung "TPV, links.vst." & Technische Zeichnung "TPV, rechts.vst." & Technische Zeichnung "TürportalverkleidungA0" & Fotografien, Bauserie C1.10, aufgenommen am 22. September 2004, Bilder 1 und 2

## Beschreibung

Die Erfindung betrifft ein großräumiges Fahrzeug für die Personenbeförderung, insbesondere Straßenbahn oder Omnibus, in dessen Innenraum ein Verkleidungselement für eine Türsäule sowie mechanische und elektrische Ausrüstungskomponenten angeordnet sind, zu denen wenigstens eine Haltestange, ein Windfang, eine Lichtschranke und eine Haltewunschtaste gehören. Ein solches großräumiges Fahrzeug ist vom Dokument DE 4 437 843 A1 bekannt.

Im Fahrzeugbau ist es allgemein üblich, das Verkleidungselement für die Türsäule und die im Absatz zuvor genannten mechanischen und elektrischen Ausrüstungskomponenten unabhängig voneinander in einzelnen Montageschritten im Fahrzeug anzubringen und nachträglich zu verkabeln. Ein solches Vorgehen bei der Montage und der Verkabelung erfordert einen hohen Zeitaufwand und besondere Funktionsprüfungen der elektrischen Ausrüstungskomponenten.

Der Erfindung liegt die Aufgabe zugrunde, ein großräumiges Fahrzeug der gattungsgemäßen Art so auszubilden, dass das Verkleidungselement für die Türsäule und bestimmte Ausrüstungskomponenten möglichst einfach und schnell montiert werden können.

Diese Aufgabe wird erfindungsgemäß dadurch gelöst, dass das Verkleidungselement für die Türsäule und zumindest eine der zuvor beschriebenen Ausrüstungskomponenten eine vollständig vormontierte und im Falle elektrischer Ausrüstungskomponenten auch verkabelte und vorgeprüfte Baueinheit bilden, wobei die Lichtschranke in das Verkleidungselement integriert ist und wobei das Verkleidungselement mit dem Fahrzeugrohbau verbindbar ist.

Durch die komplette Vormontage des Verkleidungselements mit möglichst vielen der besagten Ausrüstungskomponenten (wie Haltestange, Windfang, Haltewunschtaste und ggf. auch Entwerter für Fahrscheine) steht vorteilhaft eine einbaufertige Baueinheit zur Verfügung, die einfach und schnell nur noch an wenigen Befestigungspunkten mit dem Fahrzeugrohbau verbunden werden kann. Der Anschluss der elektrischen Ausrüstungskomponenten erfolgt über Kabelsteckverbindungen. Die Montagezeit im Fahrzeug sowie die Kosten für Lagerhaltung und Logistik sind also erheblich reduziert.

Vorteilhafte Ausgestaltungen der Erfindung sind in den Unteransprüchen angegeben.

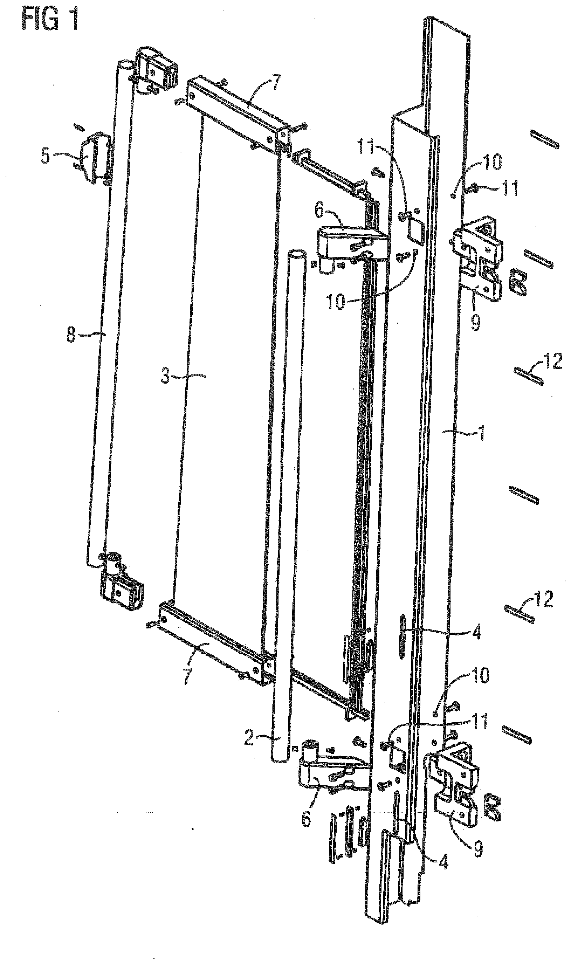

Im Weiteren wird die Erfindung anhand eines Ausführungsbeispiels näher beschrieben, das in der Zeichnung prinzipartig dargestellt ist. Es zeigen
- Fig. 1: eine für ein großräumiges Fahrzeug bestimmte Baueinheit in einer Explosions-Darstellung,

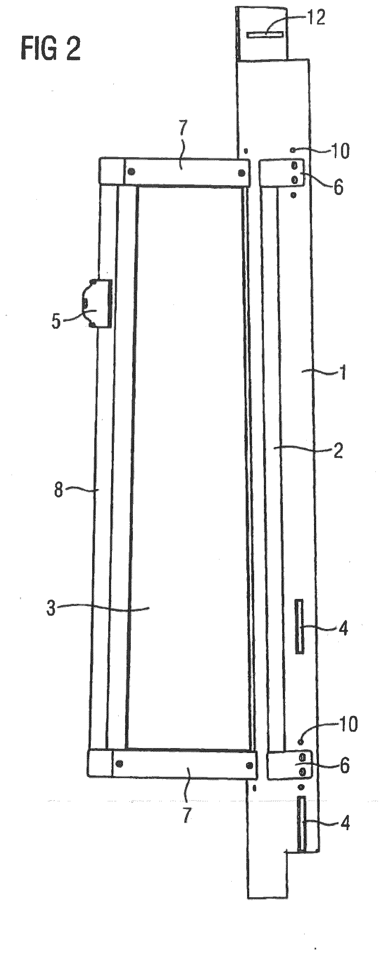

- Fig. 2: die Vorderansicht zu Fig. 1.

An einem Verkleidungselement 1 aus gekantetem Blech für eine hier nicht gezeigte Türsäule eines großräumigen Fahrzeugs ist über Anschraubböcke 6 eine Haltestange 2 befestigt. In das Verkleidungselement 1 ist eine Lichtschranke 4 integriert. Außerdem sind am Verkleidungselement 1 Halteprofile 7 für einen Windfang 3 angebracht. An den Halteprofilen 7 für den Windfang 3 ist eine weitere Haltestange 8 befestigt, die zudem als Träger für eine Haltewunschtaste 5 dient. Die weitere Haltestange 8 kann ferner einen nicht dargestellten Entwerter für Fahrscheine aufnehmen. Mit dem Bezugszeichen 9 versehene Befestigungselemente dienen dem Verbinden sowohl der Anschraubböcke 6 für die Haltestange 2 als auch der Halteprofile 7 für den Windfang 3 mit dem Verkleidungselement 1. Die so gebildete Baueinheit enthält im Übrigen eine für die elektrischen Ausrüstungskomponenten - Lichtschranke 4, Haltewunschtaste 5 und auch Entwerter - notwendige Verkabelung.

Für das Anbringen der Baueinheit an der Türsäule des Fahrzeugrohbaus, die von dem Verkleidungselement 1 U-förmig umgriffen wird, sind lediglich im Verkleidungselement 1 Bohrungen 10 für Befestigungsschrauben 11 vorgesehen, die in Gewindebohrungen der Türsäule eingreifen. Klappernde Geräusche sind durch selbstklebende Filzstreifen 12 vermieden, die zwischen dem Verkleidungselement 1 und der Türsäule angeordnet werden.

## Patentansprüche

1. Großräumiges Fahrzeug für die Personenbeförderung, insbesondere Straßenbahn oder Omnibus, in dessen Innenraum ein Verkleidungselement (1) für eine Türsäule sowie mechanische und elektrische Ausrüstungskomponenten angeordnet sind, zu denen wenigstens eine Haltestange (2), ein Windfang (3), eine Lichtschranke (4) und eine Haltewunschtaste (5) gehören, **dadurch gekennzeichnet, dass** das Verkleidungselement (1) für die Türsäule und zumindest eine der zuvor beschriebenen Ausrüstungskomponenten (2 bis 5) eine vollständig vormontierte und im Falle elektrischer Ausrüstungskomponenten (4, 5) auch verkabelte und vorgeprüfte Baueinheit bilden, wobei die Lichtschranke (4) in das Verkleidungselement (1) integriert ist und wobei das Verkleidungselement (1) mit dem Fahrzeugrohbau verbindbar ist.

2. Großräumiges Fahrzeug nach Anspruch 1,
**dadurch gekennzeichnet,**
**dass** die Haltestange (2) über Anschraubböcke (6) am Verkleidungselement (1) befestigt ist.

3. Großräumiges Fahrzeug nach Anspruch 1 oder 2,
**dadurch gekennzeichnet,**
**dass** am Verkleidungselement (1) Halteprofile (7) für den Windfang (3) angebracht sind.

4. Großräumiges Fahrzeug nach Anspruch 2 und 3,
**dadurch gekennzeichnet,**
**dass** die Anschraubböcke (6) für die Haltestange (2) und die Halteprofile (7) für den Windfang (3) über gemeinsame Befestigungselemente (9) mit dem Verkleidungselement (1) verbunden sind.

5. Großräumiges Fahrzeug nach Anspruch 3 oder 4,
**dadurch gekennzeichnet,**
**dass** an den Halteprofilen (7) für den Windfang (3) eine weitere Haltestange (8) befestigt ist.

6. Großräumiges Fahrzeug nach Anspruch 5,
**dadurch gekennzeichnet,**
**dass** die Haltewunschtaste (5) an der weiteren Haltestange (8) angebracht ist.

7. Großräumiges Fahrzeug nach einem der Ansprüche 1 bis 6,
**dadurch gekennzeichnet,**
**dass** zwischen dem Verkleidungselement (1) und der Türsäule selbstklebende Filzstreifen (12) angeordnet sind.

## Claims

1. Open-interior passenger transport vehicle, especially a tram or omnibus, inside which a lining element (1) for a door pillar is arranged, together with mechanical and electrical equipment components, including at least one handrail (2), a draught excluder (3), a photoelectric barrier (4) and a stop request button (5), **characterized in that** the lining element (1) for the door pillar and at least one of the equipment components (2 to 5) previously described form a fully pre-assembled, and in the case of electrical equipment components (4, 5) also fully wired and pre-tested modular unit, the photoelectric barrier (4) being integrated into the lining element (1) and the lining element (1) being connectable to the vehicle body structure.

2. Open-interior vehicle according to Claim 1, **characterized in that** the handrail (2) is fixed to the lining element (1) by means of fastening brackets (6).

3. Open-interior vehicle according to Claim 1 or 2, **characterized in that** retaining profiles (7) for the draught excluder (3) are fitted to the lining element (1).

4. Open-interior vehicle according to Claim 2 and 3, **characterized in that** the fastening brackets (6) for the handrail (2) and the retaining profiles (7) for the draught excluder (3) are connected to the lining element (1) by common fasteners (9).

5. Open-interior vehicle according to Claim 3 or 4, **characterized in that** a further handrail (8) is fixed to the retaining profiles (7) for the draught excluder (3).

6. Open-interior vehicle according to Claim 5, **characterized in that** the stop request button (5) is fitted to the further handrail (8).

7. Open-interior vehicle according to one of Claims 1 to 6, **characterized in that** self-adhesive felt strips (12) are arranged between the lining element (1) and the door pillar.

## Revendications

1. Véhicule de grande capacité pour le service des voyageurs, notamment ferroviaire ou omnibus, dans l'espace intérieur duquel sont montés un élément d'habillage (1) d'un montant de porte, ainsi que des composants d'équipement mécaniques et électriques, dont font partie au moins une barre de retenue (2), un paravent (3), une cellule photo-électrique (4) et un bouton de demande d'arrêt (5), **caractérisé en ce que** l'élément d'habillage (1) du montant de porte et au moins l'un des composants d'équipement (2 à 5) décrits précédemment forment une unité de construction entièrement prémontée, qui est également, dans le cas de composants d'équipement (4, 5) électriques, câblée et soumise à des contrôles préliminaires, la cellule photo-électrique (4) étant intégrée à l'élément d'habillage (1) et l'élément d'habillage (1) pouvant être relié au chaudron du véhicule.

2. Véhicule de grande capacité selon la revendication 1,
**caractérisé en ce que**
la barre de retenue (2) est fixée à l'élément d'habillage (1) par des supports de vissage (6).

3. Véhicule de grande capacité selon la revendication 1 ou 2,
**caractérisé en ce que**
des profilés de maintien (7) du paravent (3) sont fixés à l'élément d'habillage (1).

4. Véhicule de grande capacité selon les revendications 2 et 3,
**caractérisé en ce que**
les supports de vissage (6) de la barre de retenue (2) et les profilés de maintien (7) du paravent (3) sont reliés à l'élément d'habillage (1) par des éléments de fixation (9) communs.

5. Véhicule de grande capacité selon la revendication 3 ou 4,
**caractérisé en ce qu'**
une barre de retenue (8) supplémentaire est fixée aux profilés de maintien (7) du paravent (3).

6. Véhicule de grande capacité selon la revendication 5,
**caractérisé en ce que**
le bouton de demande d'arrêt (5) est fixé à la barre de retenue (8) supplémentaire.

7. Véhicule de grande capacité selon l'une des revendications 1 à 6,
**caractérisé en ce que**
des bandes de feutre (12) autocollantes sont interposées entre l'élément d'habillage (1) et le montant de porte.
